# EUROPEAN PATENT APPLICATION

(11) **EP 1 640 506 A2**
(43) Date of publication of application: **29.03.2006**
(21) Application number: 05108624.7
(22) Date of filing: 19.09.2005
(51) Int. Cl.: E01H 1/12

(54) **Disposable device for collecting the excrements of animals, particulary dogs**

(30) Priority: 24.09.2004 IT BO20040595
(71) Applicant: Piretti, Cristian, 40067 Pianoro, Frazione Rastignano BO (IT); Bruni, Luca, 40123 Bologna (IT)
(72) Inventor: Piretti, Cristian, 40067 Pianoro, Frazione Rastignano BO (IT); Bruni, Luca, 40123 Bologna (IT)
(74) Representative: Modiano, Micaela Nadia

(57) **Abstract**

A disposable device for collecting the excrements of animals, particularly dogs, comprising an element made of a material such as light cardboard, in which cutting and folding lines (3a,3b,4a,4b) and surfaces for mutual contact and adhesive bonding (6a,6b,7a,7b) form a scoop which has a substantially rectangular base and against which it is possible to fold two substantially straight side walls and a pentagonal back in which the two upper inclined sides are extended by means of respective strips, which are joined at the centerline along a complementary folding line and can be folded complementarily so as to form a sort of handle (15).

## Description

The present invention relates to a disposable device for collecting the excrements of animals, particularly dogs.

In the particular field of the elimination of solid excrements, it is known to use bags made of paper or film of a material such as plastics, which require auxiliary pick-up or collection tools, which the user must carry with him even after use, with obvious inconvenience, and are further rather expensive: it is also known to use box-like disposable containers, which are carried in a folded condition and are unfolded or assembled at the time of use and are rather bulky and often complicated to assemble, especially in view of the fact that the user often has one hand engaged by the leash.

The aim of the present invention is to obviate the above cited drawbacks and meet the mentioned requirements, by providing a disposable device for collecting the excrements of animals, particularly dogs, which is entirely disposable and is simple and intuitive to use with elementary operations which can be performed even with one hand partially unavailable.

Within this aim, an object of the present invention is to provide a device which is simple, relatively easy to provide in practice, safe in use, effective in operation, and has a relatively low cost.

This aim and this and other objects which will become better apparent hereinafter are achieved by the present disposable device for collecting the excrements of animals, particularly dogs, characterized in that it comprises an element made of a material such as light cardboard, in which cutting and folding lines and surfaces for mutual contact and adhesive bonding form a scoop which has a substantially rectangular base and over which it is possible to fold two substantially straight side walls and a pentagonal back in which the two upper inclined sides are extended by means of respective strips, which are joined at the centerline along a complementary folding line and can be folded complementarily so as to form a sort of handle.

Further characteristics and advantages of the invention will become better apparent from the following detailed description of a preferred but not exclusive embodiment of a disposable device for collecting the excrements of animals, particularly dogs, according to the invention, illustrated by way of non-limiting example in the accompanying drawings, wherein:

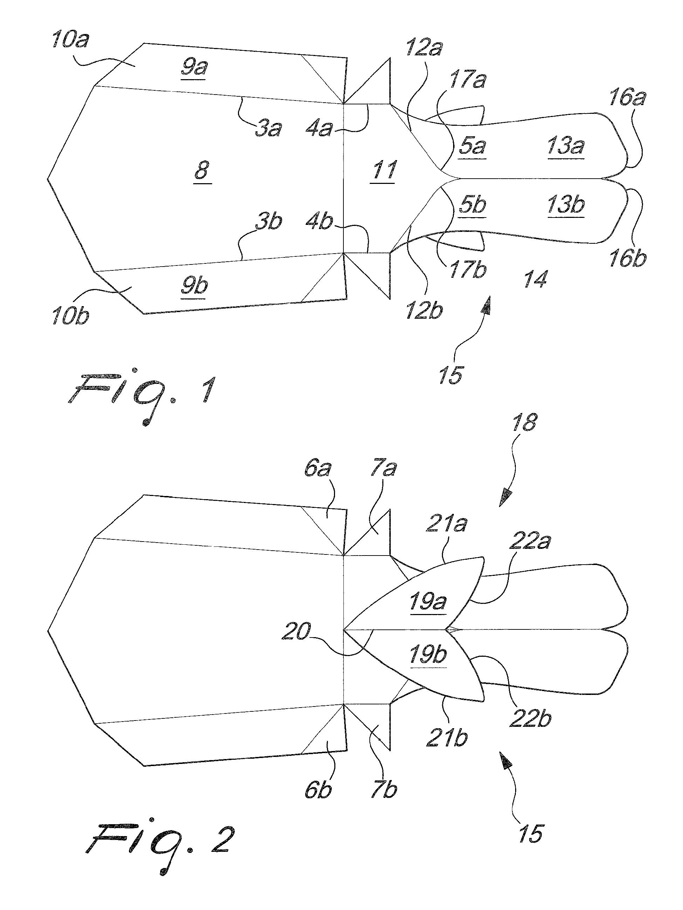

Figure 1 is a front view of the device for collecting excrements, particularly of dogs, according to the invention, extended flat;
Figure 2 is a rear view of the flat arrangement of Figure 1;
Figure 3 is a perspective view of a device according to the invention in the configuration for use;

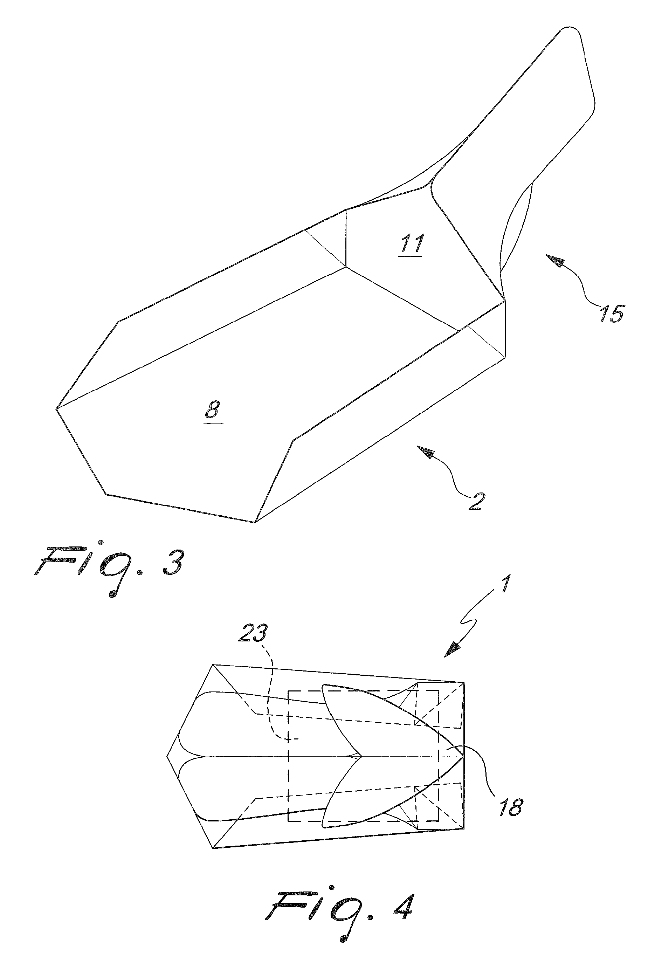

Figure 4 is a plan view of the device according to the invention in a compact configuration for carrying and storage.

With reference to the figures, the reference numeral 1 generally designates a disposable device for collecting the excrements of animals, particularly dogs, according to the invention.

The device 1 comprises an element 2 made of a material such as light cardboard, in which cutting and folding lines 3a, 3b, 4a, 4b, complementary folding lines 5a, 5b, and mutual contact and adhesive bonding surfaces 6a, 6b, 7a, 7b, shaped like right-angled triangles, form a scoop 8 which has a substantially rectangular base with side walls which move slightly mutually apart toward the free end, which forms a tip shaped like an isosceles triangle: the two side walls 9a, 9b can be folded against the base 8, are substantially straight, and have front ends which taper so as to form right-angled triangles 10a, 10b.

A back 11 is articulated to the rear of the base and is substantially pentagonal, with two upper inclined sides 12a, 12b which extend by means of respective strips 13a, 13b, which are joined at the centerline along a complementary folding line 14 and can be folded complementarily so as to form a sort of handle 15, the ends 16a, 16b, 17a, 17b of the strips being rounded.

The surfaces of the element, appropriately assembled, are suitable to be folded from an inactive configuration, in which the back and the strips rest against the base, to an active configuration, in which the complementarily folded strips form a sort of upper handle 15, which protrudes to the rear from the base.

The device 1 also comprises a reinforcement 18, which is shaped substantially like a butterfly, with two wings 19a, 19b which are articulated at the centerline 20 and are each constituted by two curved sides 21a, 21b, 22a, 22b: the tip of the reinforcement 18 ends at the base of the back 8, while the cusp-shaped recess is arranged at the upper edge of the back and the centerline of the reinforcement is fixed vertically on the rear surface of the back, so that the elasticity of the material that constitutes the reinforcement contributes to make the scoop-shaped region more reactive to the support of even heavy loads.

The device 1 also comprises a bag 23, of the type used for trash, which is made of a thin film of a material such as plastics; the scoop and the collected material are placed inside said bag.

The operation of the invention is as follows: when it is necessary to intervene, it is sufficient to unfold the cardboard element, after taking the bag 23 enclosed between the mutually adjacent back and bottom, then grip the scoop by acting on the handle, skim the ground with the tip of the scoop in order to pick up the excrement, and then insert everything in the bag and throw it in the trash.

It has thus been shown that the invention achieves the proposed aim and object.

The invention thus conceived is susceptible of numerous modifications and variations, all of which are within the scope of the appended claims.

All the details may further be replaced with other technically equivalent ones.

In the examples of embodiment shown, individual characteristics, given in relation to specific examples, may actually be interchanged with other different characteristics that exist in other examples of embodiment.

Moreover, it should noted that anything found to be already known during the patenting process is understood not to be claimed and to be the subj ect of a disclaimer.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and the dimensions, may be any according to the requirements without thereby abandoning the scope of the protection of the appended claims.

The disclosures in Italian Patent Application No. BO2004A000595 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A disposable device (1) for collecting the excrements of animals, particularly dogs, **characterized in that** it comprises an element (2) made of a material such as light cardboard, in which cutting lines, folding lines and complementary folding lines (3a, 3b, 4a, 4b, 5a, 5b) and surfaces for mutual contact and adhesive bonding (6a, 6b, 7a, 7b) form a scoop (8) which has a substantially rectangular base, a sort of upper handle (15), a reinforcement and a disposal bag, the surfaces of said elements, assembled appropriately, being adapted to be folded from an inactive configuration, in which the back and the strips rest against the base, to an active configuration, in which the complementarily folded strips form said sort of upper handle (15) which protrudes to the rear from the base.

2. The device according to claim 1, **characterized in that** it is possible to fold, at the sides of said base, two substantially straight side walls and, at the rear, a pentagonal back in which the two upper inclined sides are extended by a respective strip and are joined at the centerline along a complementary folding line in order to allow their complementary folding so as to form said handle.

3. The device according to one or more of the preceding claims, **characterized in that** said reinforcement is substantially shaped like a butterfly, in which the two wings are articulated at the centerline and are each constituted by two curved sides.

4. The device according to one or more of the preceding claims, **characterized in that** the tip of the reinforcement ends at the base of the back, while the cusp-shaped recess is arranged at the top edge of the back and the centerline of the reinforcement is fixed vertically on the rear surface of the back.
